# EUROPÄISCHE PATENTSCHRIFT

(11) **EP 3 669 300 B1**
(45) Veröffentlichungstag und Bekanntmachung des Hinweises auf die Patenterteilung: **13.12.2023**
(21) Anmeldenummer: 19725308.1
(22) Anmeldetag: 14.05.2019
(51) Int. Cl.: G06K 19/077

(54) **VORRICHTUNG UND VERFAHREN ZUM SENDEN UND EMPFANGEN VON DATEN EINES PASSIVEN RFID-TAGS**
DEVICEAND METHOD FOR TRANSMITTING AND RECEIVING DATA OF A PASSIVE RFID TAG
DISPOSITIF ET PROCÉDÉ POUR ÉMETTRE ET RECEVOIR DES DONNÉES D'UNE ÉTIQUETTE RFID PASSIVE

(30) Priorität: 25.05.2018 DE 102018112570
(43) Veröffentlichungstag der Anmeldung: 24.06.2020
(73) Patentinhaber: ebm-papst Mulfingen GmbH & Co. KG, 74673 Mulfingen (DE)
(72) Erfinder: GEHRINGER, Jan, 91541 Rothenburg o.d. Tauber (DE); HUMM, Markus, 74679 Weißbach (DE); SCHROTH, Sebastian, 74635 Kupferzell (DE); WYSTUP, Ralph, 74653 Künzelsau (DE)
(74) Vertreter: Staeger & Sperling Partnerschaftsgesellschaft mbB
(86) Internationale Anmeldenummer: PCT/EP2019/062386
(87) Internationale Veröffentlichungsnummer: WO 2019/224057

(56) Entgegenhaltungen:
- EP-A1- 1 701 296
- EP-A1- 2 733 787
- US-A1- 2007 222 602

## Beschreibung

Die Erfindung betrifft eine Vorrichtung und ein Verfahren zum Senden und Empfangen von Daten eines RFID-Speicherchips, welcher in einem geschirmten Gehäuse untergebracht ist.

Besonders betrifft die vorliegende Erfindung sogenannte NFC-Tags bzw. Speicherchips in einem Gehäuse. NFC-Tags sind passive RFID Tags, die typischerweise im 13,56Mhz HF Frequenzbereich operieren. Die Spezifikationen für den Frequenzbereich, Modulation und Datenstruktur auf dem Mikrochip werden von einer Standardisierungsorganisation namens NFC Forum festgelegt. NFC-Tags, zum Beispiel in Form von Aufklebern, Schlüsselanhängern, Karten oder Armbändern, enthalten einen Mikrochip der eine gewisse Datenmenge speichern kann. Der NFC- Tag kann dann mit einem NFC-Endgerät, zum Beispiel einem Mobiltelefon ausgelesen werden. NFC-Tags können allerdings nur eine geringe Menge an Daten speichern. Diese Datenmenge reicht aber aus, um zum Beispiel eine eindeutige ID oder dergleichen zu speichern.

Bei der drahtlosen Datenübertragung von Daten, die auf einem in einem geschirmten Gehäuse angeordneten RFID-Speicherchip gespeichert sind, kommt es in der Praxis immer wieder vor, dass die umgebenden Gehäusewände und vor allen Dingen die Schirmwirkung metallischer Gehäuse die Datenübertragung stören, ganz unterbinden oder jedenfalls nur schwache (kurzreichweitige) Signale hindurch lassen. Der einschlägige Stand der Technik bietet hierzu keine befriedigende Lösung, um Daten durch ein geschirmtes Gehäuse mit ausreichender Signalstärke zu senden oder zu empfangen.

Verschiedene RFID-Systeme mit einem RFID-Tag, also einem RFID-Chip und zumindest einer Antenne, sind beispielsweise aus den Schriften EP 1 701 296 A1, US 2007/222602 A1 und EP 2 733 787 A1 bekannt.

Vor diesem Hintergrund ist es Aufgabe der vorliegenden Erfindung, vorbenannte Nachteile zu überwinden und eine Vorrichtung und ein Verfahren zum Senden und Empfangen von Daten eines insbesondere passiven eines RFID-Speicherchips bereitzustellen, welcher in einem geschirmten Gehäuse untergebracht ist, wobei die Vorrichtung kostengünstig, sicher und auch über eine längere Zeit zuverlässig betrieben werden kann.

Diese Aufgabe wird gelöst mit einer Vorrichtung gemäß den Merkmalen von Anspruch 1 sowie einem Verfahren mit den Merkmalen von Anspruch 11.

Ein erster Grundgedanke der vorliegenden Erfindung betrifft den Aspekt, am geschirmten Gehäuse wenigstens einen Bereich mit niedriger Schirmwirkung (im Folgenden: Transmissionsbereich) zu schaffen oder gar eine Transmissionsöffnung vorzusehen. Vorzugsweise können auch zwei oder mehrere solcher (d. h. gleichartiger oder ähnlicher) Transmissionsöffnungen oder Transmissionsbereiche im Gehäuse vorgesehen werden.

Ein weiterer Grundgedanke der vorliegenden Erfindung besteht darin, eine gezielte Richtungswirkung eines für den Sende- und Empfangsvorgang erzeugten elektromagnetischen Flusses einer Sende-/Empfangseinheit zu erzielen und diesen elektromagnetischen Fluss gezielt durch den Transmissionsbereich bzw. durch die dazu vorgesehene Transmissionsöffnung zu leiten.

Erfindungsgemäß ist hierzu vorgesehen, dass zwei miteinander gekoppelte Spulenkörper so in dem elektromagnetisch geschirmten Gehäuse zueinander positioniert und/oder gekoppelt werden, dass der im Gehäuse vorgesehene Transmissionsbereich von den erzeugten elektromagnetischen Feldern durchdrungen werden kann, um so eine Kommunikation zwischen einem Lesegerät (z. B. ein Smartphone) und dem RFID- Speicherchip zu gewährleisten.

In einer vorteilhaften Ausführungsform der Erfindung ist dabei vorgesehen, dass die beiden Spulenkörper so zueinander angeordnet sind, dass sie miteinander sowie mit dem Lesegerät und dem RFID-Speicherchip koppeln. Dabei ist insbesondere vorgesehen, dass die beiden Spulen eine Art "magnetische Linse" bilden, um die elektromagnetischen Signale fokussiert durch den Transmissionsbereich hindurch zu leiten.

In einer bevorzugten Ausführungsform der Erfindung wird eine Lösung vorgeschlagen, bei der das Gehäuse als ein geschirmtes Gehäuse, vorzugsweise als ein metallisches Gehäuse z. B. eines Motors ausgebildet ist. Hierbei kann mit Vorzug vorgesehen werden, dass die beiden besagten Spulenkörper im Klemmkasten bzw. unter dem Deckel eines auf dem Motor angeordneten Inverter-Gehäuses so angeordnet werden, dass die Ausrichtung des elektromagnetischen Flusses in Richtung der im Motor-Klemmkasten vorgesehenen Aussparungen erfolgt und die Aussparungen als Transmissionsöffnungen dienen. Da ein Motor- Klemmkasten in aller Regel solche Aussparungen zur Durchführung von elektrischen Zuleitungen aufweist, kann in einer besonderen Ausführungsform der Erfindung vorgesehen sein, dass die Ausrichtung des elektromagnetischen Flusses, der durch die zwei Spulenkörper erzielten magnetische Flusswirkung gezielt in die Richtung wenigstens einer der im Klemmkasten vorhandenen Aussparungen erfolgt.

Erfindungsgemäß wird hierzu eine Vorrichtung zum drahtlosen Senden und Empfangen von Daten vorgeschlagen, welche ein elektromagnetisch geschirmtes Gehäuse sowie einen darin eingebrachten RFID-Speicherchip aufweist, wobei in der Gehäusewand des Gehäuses ein Transmissionsbereich vorgesehen ist. Ferner weist die Vorrichtung einen mit dem RFID-Speicherchip verbundenen Transceiver auf, der ausgebildet ist, Daten vom RFID-Speicherchip durch den Transmissionsbereich zu senden und/oder zu empfangen, wobei unmittelbar unterhalb oder oberhalb des Transmissionsbereichs eine Doppelspule aus zwei Spulenanordnungen zur Kopplung mit einer externen Lesevorrichtung und zur Kopplung mit dem Transceiver vorgesehen ist. Der Transceiver kann z. B. eine Drossel, eine Stabkerndrossel, eine Induktivität oder dergleichen sein.

In einer besonders bevorzugten Ausführungsform der Erfindung ist der Transmissionsbereich eine Transmissionsöffnung in Form einer Aussparung der Gehäusewand oder ein Bereich mit einer gegenüber dem umgebenden Gehäuse deutlich niedrigeren Schirmdämpfung, vorzugsweise einer Schirmdämpfung mit einem Faktor von 0,5 oder geringer als die Schirmdämpfung im Bereich des den Transmissionsbereich unmittelbar umgebende Gehäusewand des Gehäuses oder der sonstigen Gehäusewand. Die Transmissionsöffnung bzw. der Transmissionsbereich kann zum Beispiel als ein Gehäusedurchbruch, eine gitterartige Struktur mit einer Vielzahl von Durchbrüchen in der Gehäusewandung in diesem Bereich oder eine nicht oder nur schwach abschirmende Materialauswahl im Bereich der Gehäusewandung ausgebildet sein. So wäre zum Beispiel denkbar, auch eine Öffnung in der ansonsten geschlossenen Gehäusewandung einzubringen, in die ein Kunststoffdeckel oder ein Kunststoff-Inlay eingesetzt ist, welches für elektromagnetische Strahlung durchlässig ist. Auf diese Weise werden durch das Gehäuse eine vollständige Schutzfunktion gegen zum Beispiel Umwelteinflüsse und gleichzeitig eine dennoch funktionierende EMV-Abschirmung gewährleistet.

Erfindungsgemäß ist vorgesehen, dass der Transceiver mit einer Stabkerndrossel oder einem Ferrit-Kern mit einer diesen umgebenden Spulenanordnung ausgebildet ist und weiter bevorzugt diese unterhalb des Transmissionsbereichs im Gehäuse angeordnet und geeignet orientiert ist, wobei die Spulenanordnung bevorzugt ferner über einen Resonanzkreis oder eine Impedanz in Serien-oder Parallelschaltung zum Abstimmen der Resonanz der in der Vorrichtung ausgebildeten Sendeeinheit mit dem RFID-Speicherchip verbunden ist.

Ebenfalls von Vorteil ist es, wenn die Spulenanordnung über einen Resonanzkreis oder eine Impedanz in Serien-oder Parallelschaltung zum Abstimmen der Resonanz auf ein Empfangssystem mit dem RFID-Speicherchip verbunden ist. Auf diese Weise lassen sich die Resonanzfrequenzen der Schwingkreise der Sendeantennen bzw. Empfangsantennen geeignet aufeinander abstimmen.

In einer weiteren vorteilhaften Ausgestaltung der vorliegenden Erfindung ist vorgesehen, dass die Doppelspule aus den zwei Spulenanordnungen derart ausgebildet ist, dass die eine Spulenanordnung als äußere Spulenanordnung in gleicher Wickelebene um die zweite Spulenanordnung herum gewickelt ist, wobei die zweite Spulenanordnung infolgedessen als innere Spulenanordnung ausgebildet ist. Dabei ist mit Vorteil vorgesehen, dass die innere Spulenanordnung und die äußere Spulenanordnung aus einem gemeinsamen Spulendraht gewickelt oder ausgebildet sind, somit die beiden Spulenanordnungen elektrisch in Serienschaltung und räumlich in einer koaxialen Anordnung zueinander angeordnet sind.

In einer günstigen Ausführungsform ist die daraus gebildete Doppelspule auf oder in einem flachen Spulenträger in einer im Wesentlichen gemeinsamen Ebene angeordnet.

Es ist dabei von Vorteil, wenn der Spulenträger oberhalb des Transmissionsbereichs angeordnet ist und vorzugsweise ferner der Transceiver bzw. dessen Spule unmittelbar unterhalb des Transmissionsbereichs angeordnet ist. Auf diese Weise erhält man bei gezielt gleicher Ausrichtung des magnetischen Flusses in den jeweils gekoppelten Spulen eine gute elektromagnetische Kopplung aus dem ansonsten abschirmenden Gehäuse heraus.

Ein weiterer Aspekt der vorliegenden Erfindung betrifft ein Verfahren zum drahtlosen Senden und Empfangen von Daten eines in einem elektromagnetisch geschirmten Gehäuse eingebrachten RFID-Speicherchips zu einer externen, insbesondere außerhalb des Gehäuses angeordneten Empfangseinheit mit einer wie zuvor beschriebenen Vorrichtung mit den folgenden Schritten:
a) elektromagnetische Kopplung zwischen einer Spule des Transceivers und der Doppelspule, insbesondere der inneren Spulenanordnung der Doppelspule und
b) elektromagnetische Kopplung zwischen der Doppelspule, insbesondere der äußeren Spulenanordnung und einer externen Empfangseinheit zum Senden von Daten an die Empfangseinheit und/oder zum Empfangen von Daten von der Empfangseinheit.

Besonders vorteilhaft ist es, wenn die Empfangseinheit (zum Beispiel eine in einem Mobiltelefon integrierte Empfangseinheit) zum Senden und/oder Empfangen von Daten oberhalb und zwar über dem Transmissionsbereich außerhalb des Gehäuses positioniert wird, sodass eine besonders effiziente Kopplung mit der Empfangsspule der Empfangseinheit erfolgt.

Andere vorteilhafte Weiterbildungen der Erfindung sind in den Unteransprüchen gekennzeichnet bzw. werden nachstehend zusammen mit der Beschreibung der bevorzugten Ausführungsformen der Erfindung anhand der Figuren näher erläutert.

Es zeigen:
- Fig. 1: eine perspektivische Ansicht einer erfindungsgemäßen Vorrichtung in einer schematischen Darstellung;
- Fig. 2: eine Schnittansicht durch die Ansicht gemäß einer alternativen Ausführungsform, bei der zusätzlich ein Gehäusedeckel vorgesehen ist und
- Fig. 3: eine Ansicht ähnlich der Figur 1, mit Darstellung je einer magnetischen Fluss-Schleife zur Kopplung der Spulenanordnungen.

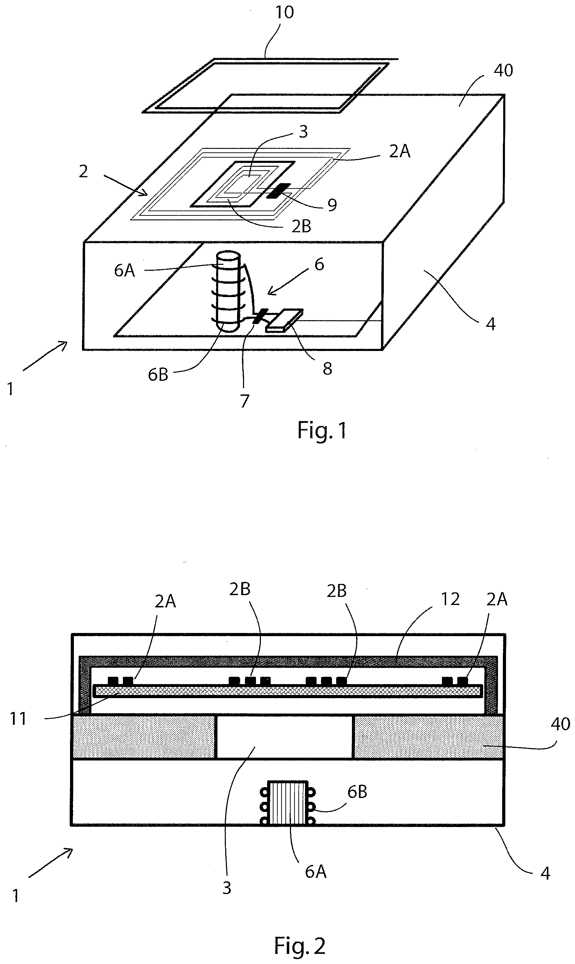

Im Folgenden wird die Erfindung anhand beispielhafter Ausführungsformen mit Bezug auf die Figuren 1 - 3 näher erläutert, wobei gleiche Bezugszeichen auf gleiche strukturelle und/oder funktionelle Merkmale hinweisen.

In der Fig. 1 wird beispielhaft und in schematischer Darstellung eine erfindungsgemäße Vorrichtung 1 gezeigt, die zum drahtlosen Senden und Empfangen von Daten des in dem elektromagnetisch geschirmten Gehäuse 4 eingebrachten RFID-Speicherchips 8 ausgebildet ist.

Das Gehäuse 4 ist ein geschlossenes Gehäuse, welches allseitig Gehäusewände 40 besitzt. In der Gehäusewand 40 des Gehäuses 4 ist ein Transmissionsbereich 3 vorgesehen. Der Transmissionsbereich 3 stellt hier eine Öffnung in der Gehäusewand dar. Ferner ist ein mit dem RFID-Speicherchip 8 verbundener Transceiver 6 vorgesehen.

Dieser ist ausgebildet, um die auf dem RFID-Speicherchip 8 gespeicherten Daten durch den Transmissionsbereich 3, somit aus dem geschirmten Gehäuse 4 heraus zu senden und/oder zu empfangen.

Hierzu ist unmittelbar oberhalb des Transmissionsbereichs 3 eine Doppelspule 2 aus den dargestellten zwei Spulenanordnungen 2A, 2B zur Kopplung mit einer externen Empfangseinheit 10 einer Lesevorrichtung sowie zur Kopplung mit dem Transceiver 6 vorgesehen. Die gezeigte Empfangseinheit 10 kann zum Beispiel in einem Smartphone mit geeigneter Software zum Verarbeiten der Daten integriert sein.

Der in den Figuren 1 und 2 dargestellte Transceiver 6 ist mit einer Stabkerndrossel 6A ausgebildet. Die Stabkerndrossel 6A ist mit einer zylinderförmigen Spulenanordnung 6B umwickelt. Wie in den Figuren 1-3 zu erkennen, sind die jeweiligen Spulenöffnungen der Spulen 2A, 2B (der Doppelspule 2), der Spulenanordnung 6B und der Spule der der Empfangseinheit 10 (z. B eine Empfängerspule) alle so ausgerichtet, dass der magnetische Fluss jeweils im Wesentlichen senkrecht die Spulenöffnungen (parallel zur Spulenachse) durchdringend verläuft. Die Doppelspule 2 besteht aus den zwei Spulenanordnungen 2A, 2B, die aus einem gemeinsamen Spulendraht gewickelt sind, wobei die eine Spulenanordnung 2A (schematisch aus 2 Spulenwicklungen) als äußere Spulenanordnung in gleicher Wickelebene um die zweite Spulenanordnung 2B (schematisch bestehend aus 3 Spulenwicklung) gewickelt ist, wobei die zweite Spulenanordnung 2B als innere Spulenanordnung ausgebildet ist. Die Doppelspule 2 ist auf einem flachen Spulenträger 11 angeordnet, der sich oberhalb der Transmissionsöffnung 3 befindet.

Der Transceiver 6 ist unmittelbar unterhalb des Transmissionsbereichs 3 angeordnet.

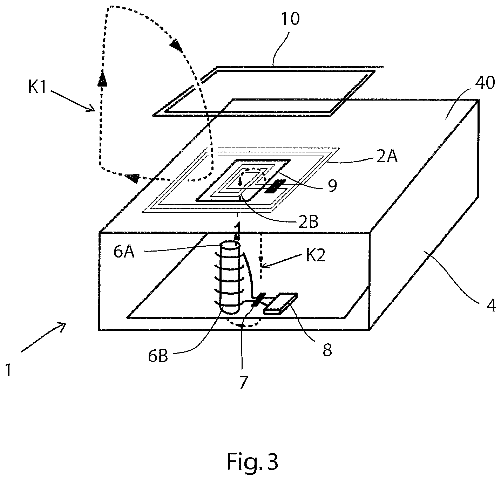

Weiterhin ist in den Figuren 1 und 3 erkennbar, dass die Spulenanordnung 6B der Sendeeinrichtung über einen Resonanzkreis 7 in Serien-oder Parallelschaltung zum Abstimmen der Resonanz auf ein Empfangssystem mit dem RFID-Speicherchip 8 verbunden ist.

Die Doppelspule 2 d. h. die Spulenanordnungen 2A, 2B sind über einen Resonanzkreis 9 in Serien-oder Parallelschaltung zum Abstimmen der Resonanz der in der Vorrichtung ausgebildeten Sendeeinheit mit dem RFID-Speicherchip 8 verbunden. In der Figur 2 ist oberhalb des Spulenträgers 11 ein Deckel 12 angebracht, der in einer ungeschirmten Ausführung ausgebildet ist und vorzugsweise aus einem vollständig nichtleitenden Material.

In der Figur 3 ist schematisch die elektromagnetische Kopplung K1 dargestellt, die das magnetische Feld zum Symbolisieren der Kopplung zwischen RFID-Leseeinheit (zum Beispiel Smartphone) und der Doppelspule 2 zeigt. Ebenso ist die Kopplung K2 symbolisiert dargestellt, die das durch die Spulenanordnung erzeugte gebündelte magnetische Feld (Feldlinie) der zwischen der Spulenanordnung und der Stabkerndrossel 6 mit dessen Spule 6B erzeugten elektromagnetischen Kopplung repäsentiert.

Die Erfindung beschränkt sich in ihrer Ausführung nicht auf die vorstehend angegebenen bevorzugten Ausführungsbeispiele.

## Patentansprüche

1. Vorrichtung (1) zum drahtlosen Senden und Empfangen von Daten
aufweisend ein elektromagnetisch geschirmtes Gehäuse (4) und einen RFID-Speicherchip (8), welcher in das Gehäuse (4) eingebracht ist,
wobei in einer Gehäusewand (40) des Gehäuses (4) ein Transmissionsbereich (3) vorgesehen ist und
wobei die Vorrichtung (1) ferner ein mit dem RFID-Speicherchip (8) verbundenen Transceiver (6) aufweist, **dadurch gekennzeichnet, dass** der Transceiver (6) ausgebildet ist mit einer Stabkerndrossel (6A) oder einem Ferrit-Kern mit einer diesen umgebenden Spulenanordnung (6B), wobei der Transceiver (6) ausgebildet ist, Daten von dem RFID-Speicherchip (8) durch den Transmissionsbereich (3) zu senden und/oder zu empfangen,
wobei unmittelbar unterhalb oder oberhalb des Transmissionsbereichs (3) eine Doppelspule (2) aus zwei Spulenanordnungen (2A, 2B) zur Kopplung mit einer externen Empfangseinheit (10) einer Lesevorrichtung und zur Kopplung mit dem Transceiver (6) vorgesehen ist.

2. Vorrichtung (1) nach Anspruch 1, **dadurch gekennzeichnet, dass** der Transmissionsbereich (3) eine Transmissionsöffnung in Form einer Aussparung in der Gehäusewand (40) oder ein Bereich mit einer gegenüber dem umgebenden Gehäuse deutlich niedrigeren Schirmdämpfung vorzugsweise einer Schirmdämpfung mit einem Faktor von 0,5 oder geringer der Schirmdämpfung im Bereich des den Transmissionsbereich (3) umgebende Gehäusewand (40) des Gehäuses (4).

3. Vorrichtung (1) nach Anspruch 1 oder 2, **dadurch gekennzeichnet, dass** die Spulenanordnung (6B) über einen Resonanzkreis oder eine Impedanz (7) in Serien-oder Parallelschaltung zum Abstimmen der Resonanz auf ein Empfangssystem mit dem RFID-Speicherchip (8) verbunden ist.

4. Vorrichtung (1) nach einem der vorhergehenden Ansprüche, **dadurch gekennzeichnet, dass** die Doppelspule (2) aus den zwei Spulenanordnungen (2A, 2B) derart ausgebildet ist, dass die eine Spulenanordnung (2A) als äußere Spulenanordnung in gleicher Wickelebene um die zweite Spulenanordnung (2B) gewickelt ist, wobei die zweite Spulenanordnung (2B) als innere Spulenanordnung ausgebildet ist.

5. Vorrichtung (1) nach Anspruch 4, **dadurch gekennzeichnet, dass** die innere Spulenanordnung (2B) und die äußere Spulenanordnung (2A) aus einem gemeinsamen Spulendraht (20) gewickelt oder ausgebildet sind.

6. Vorrichtung (1) nach einem der vorhergehenden Ansprüche, **dadurch gekennzeichnet, dass** die Spulenanordnung (2A, 2B) über einen Resonanzkreis oder eine Impedanz (9) in Serien-oder Parallelschaltung zum Abstimmen der Resonanz der in der Vorrichtung (1) ausgebildeten Sendeeinheit mit dem RFID-Speicherchip (8) verbunden ist.

7. Vorrichtung (1) nach einem der vorhergehenden Ansprüche, **dadurch gekennzeichnet, dass** die Doppelspule (2) auf oder in einem flachen Spulenträger (11) angeordnet ist.

8. Vorrichtung (1) nach Anspruch 7, **dadurch gekennzeichnet, dass** der Spulenträger (11) oberhalb des Transmissionsbereichs (3) angeordnet ist.

9. Vorrichtung (1) nach einem der vorhergehenden Ansprüche **dadurch gekennzeichnet, dass** der Transceiver (6) unmittelbar unterhalb des Transmissionsbereichs (3) angeordnet ist.

10. Verfahren zum drahtlosen Senden und Empfangen von Daten eines in einem elektromagnetisch geschirmten Gehäuse (4) eingebrachten RFID-Speicherchips (8) zu einer externen, insbesondere außerhalb des Gehäuses (4) angeordneten Empfangseinheit mit einer Vorrichtung (1) gemäß einem der vorhergehenden Ansprüche mit den folgenden Schritten:
a) elektromagnetische Kopplung zwischen einer Spule (6A) des Transceivers (6) und der Doppelspule (2), insbesondere der inneren Spulenanordnung (2B) und
b) elektromagnetische Kopplung zwischen der Doppelspule (2), insbesondere der äußeren Spulenanordnung (2A) und einer externen Empfangseinheit (10) zum Senden von Daten an die Empfangseinheit und/oder zum Empfangen von Daten von der Empfangseinheit.

11. Verfahren nach Anspruch 10, **dadurch gekennzeichnet, dass** die Empfangseinheit (10) zum Senden und/oder Empfangen von Daten oberhalb und zwar über dem Transmissionsbereich (3) außerhalb des Gehäuses (4) positioniert wird.

## Claims

1. A device (1) for wirelessly transmitting and receiving data comprising an electromagnetically shielded housing (4) and a RFID memory chip (8) introduced in said housing (4), wherein a transmission region (3) is provided in a housing wall (40) of the housing (4) and wherein the device (1) further has a transceiver (6) connected to the RFID memory chip (8), **characterized in that** the transceiver (6) is configured with a rod core choke (6A) or a ferrite core with a coil assembly (6B) surrounding the same, wherein the transceiver (6) is configured to transmit and/or receive data from the RFID memory chip (8) through the transmission region (3), wherein a double coil (2) formed by two coil assemblies (2A, 2B) for coupling to an external receiving unit (10) of a reading device and for coupling to the transceiver (6) is provided directly above or below the transmission region (3).

2. The device (1) according to claim 1, **characterized in that** the transmission region (3) is a transmission opening in the form of a recess in the housing wall (40) or a region having a significantly lower shielding attenuation than the surrounding housing, preferably a shielding attenuation which is by a factor of 0.5 or lower than the shielding attenuation in the area of the housing wall (40) surrounding the transmission region (3) or the remaining housing wall of the housing (4).

3. The device (1) according to claim 1 or 2, **characterized in that** the coil assembly (6B) is connected in series or in parallel to the RFID memory chip (8) via a resonance circuit or an impedance (7) for tuning the resonance to a receiving system.

4. The device (1) according to any one of the preceding claims, **characterized in that** the double coil (2) from the two coil assemblies (2A, 2B) is configured such that the one coil assembly (2A) is wound as an outer coil assembly in the same winding plane around the second coil assembly (2B), wherein the second coil assembly (2B) is configured as an inner coil assembly.

5. The device (1) according to claim 4, **characterized in that** the inner coil assembly (2B) and the outer coil assembly (2A) are wound or formed from a common coil wire (20).

6. The device (1) according to any one of the preceding claims, **characterized in that** the coil assembly (2A, 2B) is connected in series or in parallel to the RFID memory chip (8) via a resonance circuit or an impedance (9) for tuning the resonance of the transmitting unit configured in the device (1).

7. The device (1) according to any one of the preceding claims, **characterized in that** the double coil (2) is disposed on or in a flat coil carrier (11).

8. The device (1) according to claim 7, **characterized in that** the coil carrier (11) is disposed above the transmission region (3).

9. The device (1) according to any one of the preceding claims, **characterized in that** the transceiver (6) is disposed directly below the transmission region (3).

10. A method for wirelessly transmitting and receiving data of an RFID memory chip (8) introduced in an electromagnetically shielded housing (4) to an external receiving unit, particularly to a receiving unit disposed outside of the housing (4), using a device (1) as described above and comprising the following steps:
a) electromagnetic coupling between a coil (6A) of the transceiver (6) and the double coil (2), particularly the inner coil assembly (2B), and
b) electromagnetic coupling between the double coil (2), particularly the outer coil assembly (2A), and an external receiving unit (10) for transmitting data to the receiving unit and/or receiving data from the receiving unit.

11. The method according to claim 10, **characterized in that** the receiving unit (10) is positioned above the transmission region (3) outside the housing (4) for transmitting and/or receiving data.

## Revendications

1. Dispositif (1) pour émettre et recevoir sans fil des données, présentant un boîtier (4) à blindage électromagnétique et une puce mémoire RFID (8) qui est incorporée dans le boîtier (4),
dans lequel une zone de transmission (3) est prévue dans une paroi de boîtier (40) du boîtier (4), et
dans lequel le dispositif (1) présente en outre un émetteur-récepteur (6) relié à la puce mémoire RFID (8), **caractérisé en ce que** l'émetteur-récepteur (6) est réalisé avec une bobine à noyau en forme de baguette (6A) ou avec un noyau de ferrite muni d'un agencement de bobine (6B) entourant celui-ci, dans lequel l'émetteur-récepteur (6) est réalisé pour émettre et/ou recevoir à travers la zone de transmission des données provenant de la puce mémoire RFID (8),
dans lequel directement au-dessous ou au-dessus de la zone de transmission (3), une double bobine (2) composée de deux agencements de bobine (2A, 2B) est prévue pour un couplage avec une unité de réception externe (10) d'un dispositif de lecture et pour un couplage avec l'émetteur-récepteur (6).

2. Dispositif (1) selon la revendication 1, **caractérisé en ce que** la zone de transmission (3) est une ouverture de transmission sous la forme d'un évidement dans la paroi de boîtier (40) ou une zone ayant un niveau d'atténuation nettement inférieur par rapport au boîtier environnant, de préférence un niveau d'atténuation d'un facteur de 0,5 ou inférieur au niveau d'atténuation dans la zone de la paroi de boîtier (40) du boîtier (4) entourant la zone de transmission (3).

3. Dispositif (1) selon la revendication 1 ou 2, **caractérisé en ce que** l'agencement de bobine (6B) est relié à la puce mémoire RFID (8) par l'intermédiaire d'un circuit résonant ou d'une impédance (7) dans un montage série ou parallèle pour accorder la résonance à un système de réception.

4. Dispositif (1) selon l'une quelconque des revendications précédentes, **caractérisé en ce que** la double bobine (2) composée des deux agencements de bobine (2A, 2B) est réalisée de telle sorte que ledit un agencement de bobine (2A) est enroulé en tant qu'agencement de bobine extérieur dans le même plan d'enroulement sur le deuxième agencement de bobine (2B), le deuxième agencement de bobine (2B) étant réalisé en tant qu'agencement de bobine intérieur.

5. Dispositif (1) selon la revendication 4, **caractérisé en ce que** l'agencement de bobine intérieur (2B) et l'agencement de bobine extérieur (2A) sont enroulés ou réalisés à partir d'un fil de bobine commun (20).

6. Dispositif (1) selon l'une quelconque des revendications précédentes, **caractérisé en ce que** l'agencement de bobine (2A, 2B) est relié à la puce mémoire RFID (8) par l'intermédiaire d'un circuit résonant ou d'une impédance (9) dans un montage série ou parallèle pour accorder la résonance de l'unité d'émission réalisée par le dispositif (1).

7. Dispositif (1) selon l'une quelconque des revendications précédentes, **caractérisé en ce que** la double bobine (2) est disposée sur ou dans un support de bobine plat (11).

8. Dispositif (1) selon la revendication 7, **caractérisé en ce que** le support de bobine (11) est disposé au-dessus de la zone de transmission (3).

9. Dispositif (1) selon l'une quelconque des revendications précédentes, **caractérisé en ce que** l'émetteur-récepteur (6) est disposé directement au-dessous de la zone de transmission (3).

10. Procédé pour émettre et recevoir sans fil des données d'une puce mémoire RFID (8) incorporée dans un boîtier (4) à blindage électromagnétique à destination d'une unité de réception externe, en particulier disposée à l'extérieur du boîtier (4), avec un dispositif (1) selon l'une quelconque des revendications précédentes, comprenant les étapes suivantes :
a) un couplage électromagnétique entre une bobine (6A) de l'émetteur-récepteur (6) et la double bobine (2), en particulier de l'agencement de bobine intérieur (2B), et
b) un couplage électromagnétique entre la double bobine (2), en particulier de l'agencement de bobine extérieur (2A) et une unité de réception externe (10) pour émettre des données à destination de l'unité de réception et/ou pour recevoir des données provenant de l'unité de réception.

11. Procédé selon la revendication 10, **caractérisé en ce que** pour l'émission et/ou la réception de données, l'unité de réception (10) est positionnée à l'extérieur du boîtier (4), au-dessus de celui-ci, notamment au-dessus de la zone de transmission (3).
